# EUROPEAN PATENT SPECIFICATION

(11) **EP 2 269 759 B1**
(45) Date of publication and mention of the grant of the patent: **06.11.2013**
(21) Application number: 10006812.1
(22) Date of filing: 01.07.2010
(51) Int. Cl.: B23K 9/173

(54) **Arc welding torch of the type MIG or MAG**
Lichtbogenschweißbrenner des MIG- oder MAG-Typs
Chalumeau de soudage à l'arc de type MIG ou MAG

(30) Priority: 03.07.2009 IT MI20091176
(43) Date of publication of application: 05.01.2011
(73) Proprietor: Tecnoelettra SPA, 23885 Calco (LC) (IT)
(72) Inventor: Brambilla, Fabrizio, 23807 Merate (LC) (IT)

(56) References cited:
- WO-A1-2008/018979
- FR-A1- 2 349 389
- US-A- 4 554 432
- US-A- 4 560 858
- US-A- 5 611 951
- US-A1- 2002 113 046
- US-A1- 2003 209 530

## Description

The present invention refers to an arc welding torch in particular of the type MIG or MAG respectively acronyms of the english terms "Metal-arc Inert Gas" and "Metal-arc Active Gas", or also known with the term GMAW acronym of the english term "Gas Metal Arc Welding", which means arc welding with metal under gas protection.

The arc welding torch of type MIG or MAG has three functions:
- to permit the forming of an electric arc between a welding wire and a piece to be welded;
- to feed the welding wire up in the vicinity of the welding bath;
- to bring a protection gas on the welding bath.

US 2002/0113046 A1, on which the preamble of claim 1 is based, discloses such an are welding torch.

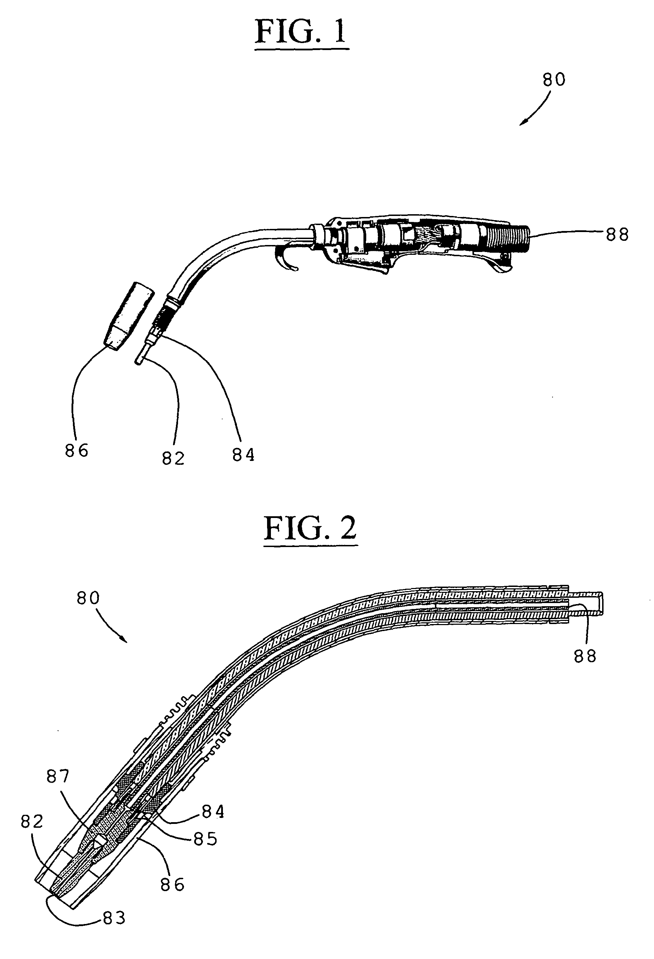

With reference to figures 1 and 2 a welding torch 80 of this type is shown, normally comprising a metallic lance body 81 capable of transferring an electric current, inside which flows an inert protection gas capable to protect the welding bath.

Inside said lance body 81 a wire guide 88 is further inserted inside which said welding wire advances.

With reference to figure 2 according to the known art said lance body 81 is connected to a diffuser element 84 of the protection gas and to a contact tip holder 87 realized in a metallic material in order to transfer to the same an electric current received by said lance body 81.

Said welding torch 80 further comprises a metallic contact tip 82 which is inserted into said contact metallic tip holder 87 and from which it receives said electric current.

Said contact tip 82 is also capable of transferring said electric current to the welding wire, so that between the welding wire and a piece to be welded an electric arc is formed capable to melt the welding wire by determining a welding bath.

The contact tip 82 is in fact provided with a through bore 83 inside which the welding wire passes, and is capable of transferring said electric current to the welding wire by contact with the same inside said through bore 83, and consequently based upon the diameter of the welding wire it is necessary to have a contact tip with a diameter corresponding approximately to the welding wire.

Said metallic tip holder 87 also permits to change said contact tip 82 in case of changing the welding wire with another one having a different diameter or in case of an excessive wear of the contact tip 82 itself.

Typically said diffuser element 84 is realized in a ceramic material or in a reinforced polyester and is able to diffuse said protection gas through a series of radial bores 85 which typically diffuse said protection gas in a radial direction directly to a nozzle 86 surrounding said diffuser element 84, said tip holder 87 and said contact tip 82.

The nozzle 86 is very warm during the use of the welding torch 80, typically approximately at 200°C or 300°C, and determines a significant heating of the protection gas which then subsequently flows towards the exit of the nozzle 86 to protect the welding bath.

A disadvantage of the existing welding torches resides in that they do not permit a good control of the temperature of the welding alloy.

This is principally due to the contact tip 82 which warms up excessively during the time reaching very high temperatures due to the transfer of said electric current to said welding wire.

In the case of a pulsed arc welding the fusion of said welding wire is determined by a series of pulses of electric current which are generated by an electric generator when through a pushbutton an advancement of the welding wire through said metallic wire guide 88 is actuated.

Usually said wire guide 88 has the function of guiding said welding wire up to the contact tip 82 and comprises a metallic spiral realized with a metal wire with round section which has an inner diameter slightly greater than the diameter of said welding wire.

Another disadvantage resides in that during the advancement of the welding wire in case of an excessive bending of said wire guide a greater friction between the welding wire and said wire guide is determined.

This increase of the friction determines consequently a lesser advancement of the welding wire and also determines an advancement speed which is not constant and which moreover is not synchronized with the actuation of the advancement of the welding wire.

This determines the disadvantage of the loss of synchronization between the electric pulses produced for melting said welding wire and the advancement of the welding wire.

Consequently this phase difference of the advancement of the welding wire and the loss of synchronization with the electric pulse generator affect the quality of the welding and complicate significantly the use of the welding torch.

Aim of the present invention is to realize an arc welding torch of the type MIG or MAG having a limited number of components and allowing a reduction of the maximum temperature of said contact tip, together with a reduced maintenance.

Other aim is to realize an arc welding torch of the type MIG or MAG allowing to improve the quality of the welds and permit a better control of the temperature of the welding alloy during a welding.

Another aim is to have an arc welding torch of the type MIG or MAG which permits to have a reduced friction and allows a suitable advancement of the welding wire even when the wire guide in which the same passes is curved.

A further aim is to have an arc welding torch of the type MIG or MAG which permits to reduce the protective gas consumption.

Another aim is to have a welding torch which is economically advantageous.

This aims according to the present invention are reached by realizing a welding torch as exposed in claim 1.

Further characteristics of the invention are highlighted by the subsequent claims.

The characteristics and the advantages of a welding torch according to the present invention will be more evident from the following description, exemplificative and non limitative, referred to the annexed schematic drawings in which:
figure 1 is a perspective view in partial section and in right side elevation of a welding torch of the type MIG or MAG according to the known art;
figure 2 is a sectioned view in a right side elevation of a detail of figure 1 according to the known art;

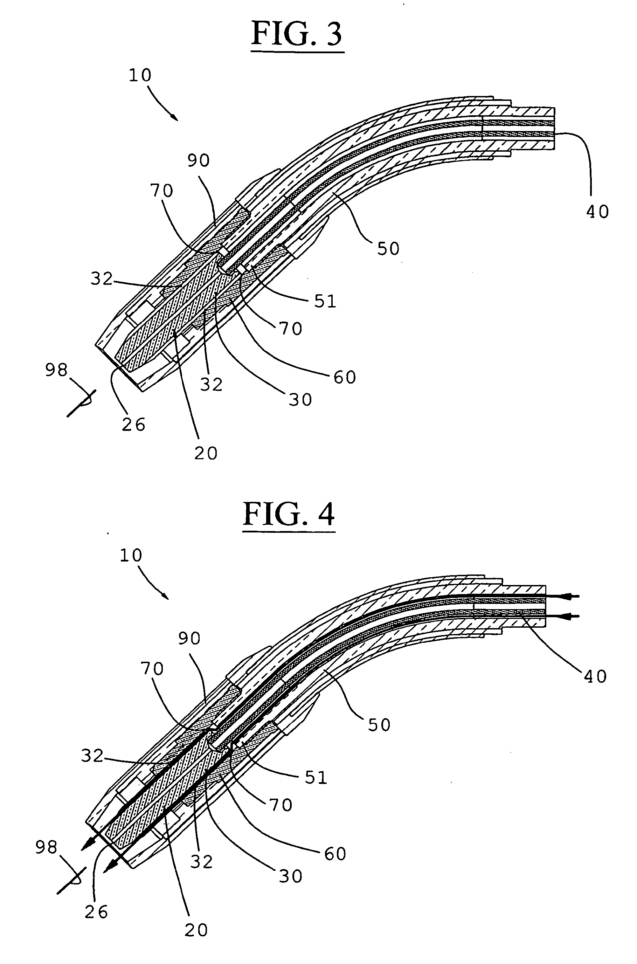

figure 3 is a broken view partially in section and in right side elevation of a preferred embodiment of an arc welding torch of type MIG or MAG according to the present invention;
figure 4 is the same view of figure 3 according to the present invention, in which the path of an inert protection gas flow is pointed out inside the arc welding torch;

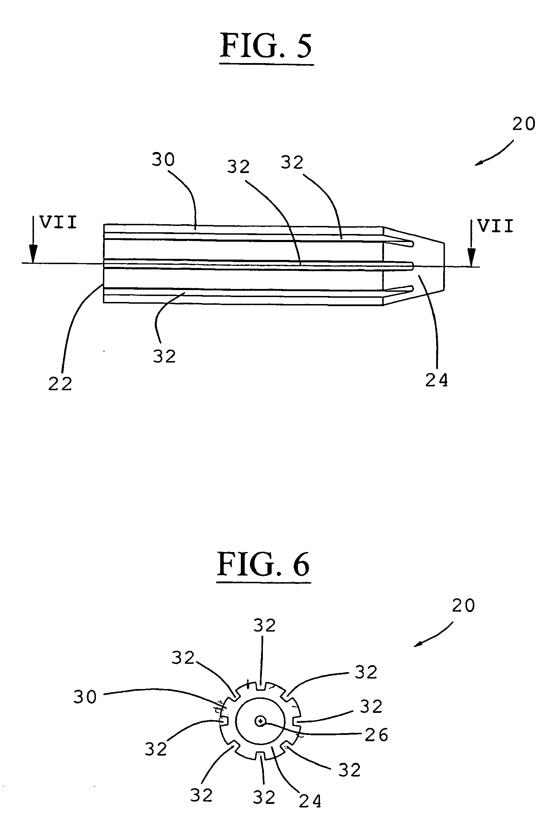

figure 5 is a left side elevation view of a preferred embodiment of a contact tip of an arc welding torch of the type MIG or MAG according to the present invention;
figure 6 is a front elevation view of the contact tip of figure 5;

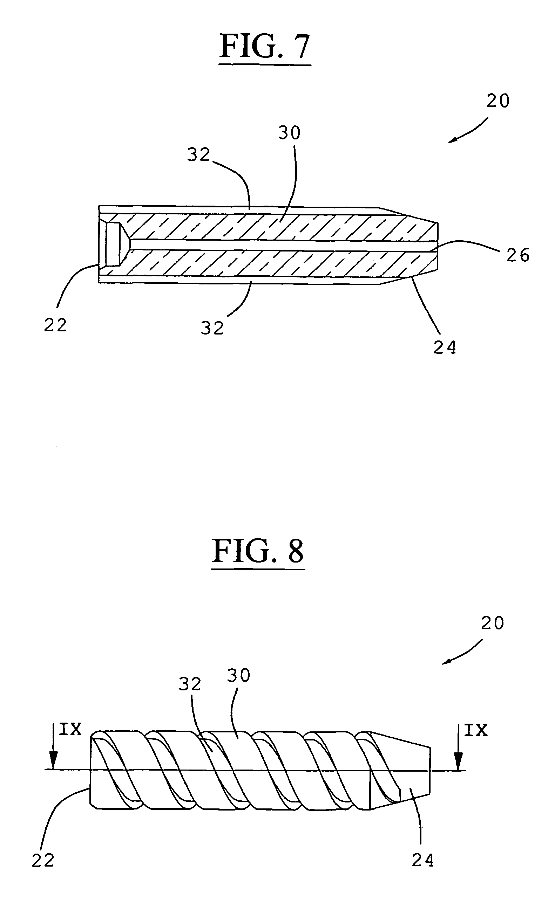

figure 7 is a left side elevation view of the contact tip of figure 5 in section, according to the line VII-VII;
figure 8 is a left side elevation view of another embodiment of a contact tip of a welding torch of type MIG or MAG according to the present invention;

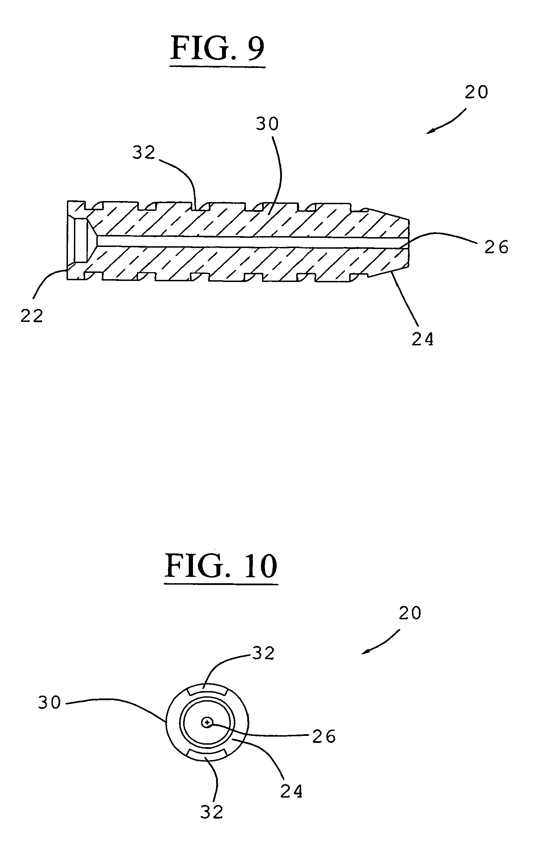

figure 9 is a left side elevation view of the contact tip of figure 8 in section, according to the line IX-IX;
figure 10 is a side elevation view from behind of the contact tip of figure 8;

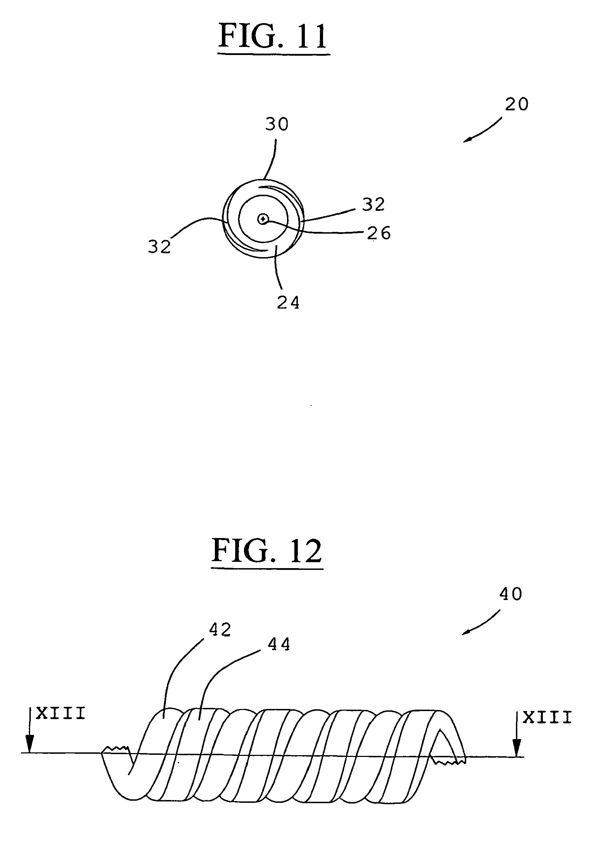

figure 11 is a front elevation view of the contact tip of figure 8;
figure 12 is a left side elevation view of a preferred embodiment of a wire guide of a welding torch of type MIG or MAG according to the present invention;

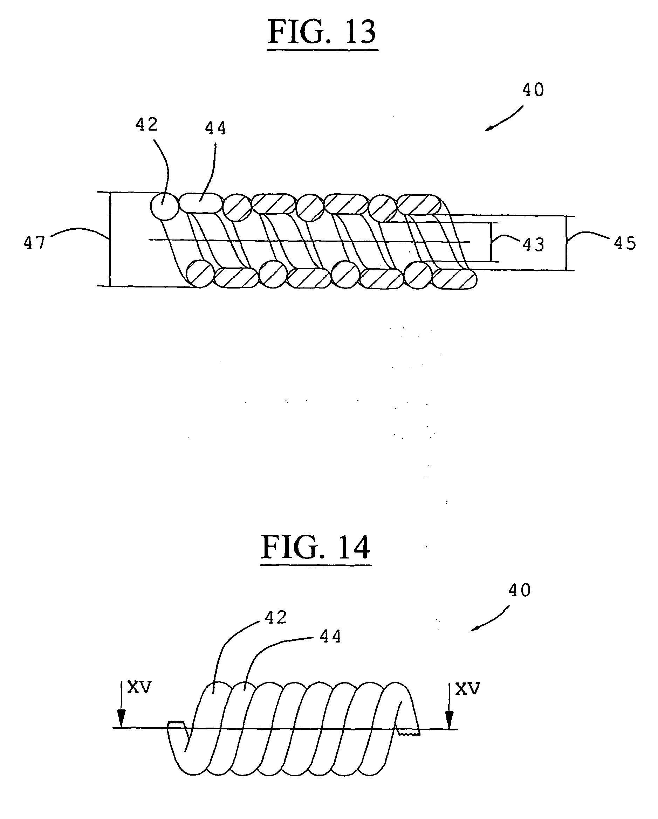

figure 13 is a left side elevation view of the wire of figure 12 sectioned according to the line XIII-XIII;
figure 14 is a left side elevation view of another preferred embodiment of a wire guide of a welding torch of type MIG or MAG according to the present invention;

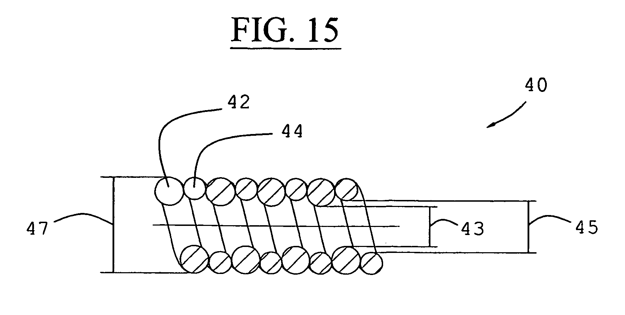

figure 15 is a left side elevation view of the wire guide of figure 14 sectioned according to the line XV-XV.

The present invention refers to an arc welding torch 10 in particular of the type MIG or MAG, which comprises a metallic tubular lance body 50 capable to conduct an electric current and inside which a protection gas of a welding bath flows, and comprises a metallic contact tip 20 provided with an axial through bore 26 for the passage of a welding wire.

According to the present invention said contact tip 20 is directly partially insertable inside and constrainable to an extremity 51 of said metallic lance body 50 or said contact tip 20 is partially insertable inside and constrainable to a metallic connection sleeve 60 which can be fixed to said extremity 51 of said metallic lance body 50, said contact tip 20 respectively defining with said extremity 51 of said lance body 50 or with said connection sleeve 60 at least a longitudinal internal passage 70 capable to determine a longitudinal flow of the protection gas which in this way comes directly in contact with an external lateral portion 30 of said contact tip 20 in order to cool the same and to permit also the passage of said protection gas of said welding bath.

Preferably said contact tip 20 is directly and partially insertable in said extremity 51 of said metal lance body 50 and constrainable to the same, in order to define said at least one longitudinal internal passage 70.

Alternatively and preferably said arc welding torch 10 of the type MIG or MAG comprises said metallic connection sleeve 60 which can be fixed to said extremity 51 of said metallic lance body 50, and also said contact tip 20 is partially insertable internally and constrainable to said metallic connection sleeve 60, in order to define said at least one longitudinal internal passage 70.

Said metallic connection sleeve 60 is able to receive said current from said lance body 50 and transfer it to said contact tip 20, said metallic contact tip 20 being capable of transferring said electric current to said welding wire to determine the melting of the same in order to determine a welding bath.

Advantageously this permits to obtain a reduction of the number of components of said welding torch 10, because in this way a production of a contact tip holder and of a diffuser of said protection gas, typically not realized in a metallic material, is avoided.

In fact the contact tip 20 is able to couple itself directly to said lance body 50 or directly to said metallic connection sleeve 60, and in this way it is able:
- to receive the current from said metallic connection sleeve 60 or from said metallic lance body 50 and transfer the same to the welding wire;
- to define said at least one internal longitudinal passage 70 in order to permit the passage of the protection gas and at the same time to cool itself by the passage of a longitudinal flow of said protection gas, which is passed directly on its external lateral portion 30.

This permits also a reduction of the production cost, because it permits to produce a smaller number of elements, and also a time and assembly costs reduction of the welding torch 10.

Referring to the figures, it can be noted that at least one internal longitudinal passage 70 is disposed inside with respect to said lance body 50 or said connection sleeve 60, and also it is evident that said metallic contact tip 20 defines said at least one internal longitudinal passage 70 with respect to said extremity 51 of said lance body 50 or internally to said connection sleeve 60.

In this way a direct flow of protection gas is formed in a longitudinal direction which gets directly near said outer side portion 30 of said contact tip 20 by cooling the same.

In other words said direct flow of protection gas, coming out from said extremity 51 of said lance body 50 is directly introduced in said at least one internal longitudinal passage 70, in order to come in contact directly with said external lateral portion 30 of said contact tip 20, by cooling the same.

On the contrary the protection gas with a diffuser of the known art provided with outlet radial bores, which are orthogonal with respect to a longitudinal direction 98, could not determine anyway a direct contact and a cooling of said contact tip, also because the gas in the known art is heated by the nozzle before reaching the contact tip.

In the welding torch 10 of type MIG or MAG according to the present invention the protection gas is also used as a cooling gas of the contact tip 20 and advantageously also of the connection sleeve 60 if present.

Said contact tip 20 is an element subjected to a high wear and therefore it must be frequently replaced.

Consequently said metallic connection sleeve 60 being constrained to said contact tip 20 is also subjected to wear and therefore it must also be replaced, even if less frequently.

According to a preferred embodiment it is possible to realize said contact tip 20 in a single piece with said sleeve 60, and in such a case to avoid wear problems said extremity 51 of the lance body 50 is realized in a copper alloy having a high hardness and a good electrical conductibility or it is provided with a wear resistant coating.

Preferably said at least one internal longitudinal passage 70 is at least a groove 32 realized in said external lateral portion 30 of said contact tip 20 or inside said metallic connection sleeve 60 or inside said extremity 51 of said lance body 50.

Preferably said at least one groove 32 is realized in said external side portion 30 of said contact tip 20 and it permits the passage of said protection gas from a first extremity 22 to a second extremity 24 of said contact tip 20, and is also very simple to realize.

Advantageously this permits to have a contact tip 20 capable of cooling itself exploiting a longitudinal flow of said protection gas, and also of having at the same time a further function of diffusing the protection gas around said welding bath.

In particular said at least one groove 32 is realized from a first base surface of said first extremity 22 and it extends continuously towards said second extremity 24 at least for a portion of said contact tip 20 which is insertable from said first extremity 22 in said metallic connection sleeve 60 or in said lance body 50.

Advantageously said at least one groove permits a good control of the melting temperature of said welding wire, because in this embodiment it permits to obtain a high heat exchange surface, which through the passage of said longitudinal flow of said protection gas advantageously determines a very good cooling of said contact tip.

By properly dimensioning the depth and the number of grooves 32 it is therefore possible to obtain a contact tip 20 permitting a very precise control of the maximum temperature of said contact tip 20 obtained by actuating a direct cooling of said contact tip by passing said protection gas through said at least one groove 32.

This permits to obtain a contact tip 20 having a high control of the maximum temperature of the same, determining advantageously a significant improvement of the welding quality.

This also permits to maintain a limited encumbrance of said contact tip 20 by reducing at the same time the maximum temperature of the same, by increasing the welding quality and of the useful life of said contact tip 20.

The decrease of the maximum temperature of said contact tip 20 permits also to increase the electric current and the speed of the welding wire by determining a greater welding speed, with a reduction of times and costs for the realization of big goods and also permits to reduce the energetic consumptions with the same electric current.

Furthermore the greater cooling capacity of said contact tip 20 determined by said at least one groove 32 permits a reduction of the dimensions of said contact tip 20 itself, consequently permitting also an advantageous reduction of the transversal section of said welding torch with a consequent reduction of the weight and of the encumbrance of the same.

In this way it is possible to realize a contact tip 20 and a welding torch provided with a smaller nozzle which permits to work more easily in particular also in narrower spaces.

Preferably said contact tip 20 has a diameter comprised between 6 and 16 mm and also comprises a threaded portion, preferably realized on said external lateral portion 30, which permits to partially insert and axially constrain said contact tip 20 internally inside said metallic connection sleeve 60 or internally inside said extremity 51 of said lance body 50, so permitting a good passage of electric current and at the same time allowing for a great longitudinal flow of said protection gas.

Advantageously this permits to easily realize a stable connection which permits a good passage of electric current necessary for melting such welding wire.

Preferably said metallic connection sleeve 60 is made preferably of copper and/or its alloys to reduce the resistivity to a minimum and to permit a better transmission of said electric current to said metallic contact tip 20, also made preferably of copper and/or its alloys.

Preferably said second extremity 24 is preferably tapered in order to better diffuse said protection gas.

Preferably said contact tip is made of copper or its alloys to reduce the resistivity to a minimum.

Preferably said at least one groove 32 extends from said first extremity 22 towards said second extremity 24, in particular up to said second extremity, following a substantially rectilinear or curvilinear path.

Advantageously this permits to easily realize said at least one groove 32.

Preferably said at least one groove 32 extends from said first extremity 22 towards said second extremity 24 following a substantially spiral or helical path.

Advantageously, the volume of said protection gas being the same, this increases the contact time with said contact tip 20, also increasing the cooling of the same.

According to a preferred embodiment said at least one groove 32 extends from said first extremity 22 to said second extremity 24 following a substantially spiral or helical path.

Preferably said at least one groove 32 are at least two grooves 32 substantially linear and/or curvilinear.

Preferably said at least one groove 32 are at least three grooves 32 substantially linear e/o curvilinear.

Preferably said at least one groove 32 are at least four grooves 32 and in particular at least eight grooves 32 substantially linear or curvilinear which extend from said first extremity 22 towards said second extremity 24 and which are in particular realized uniformly radially spaced in said external lateral portion 30.

Advantageously this permits an easy production of a contact tip 20 which permits a great flow of said protection gas and which at the same time also permits a great cooling of the same.

Said welding torch further comprises a metallic welding wire guide 40 capable to guide said welding wire in particular up to said bore 26 of said contact tip 20.

According to the present invention said wire guide 40 comprises a double flexible metallic spiral formed by a first flexible metallic spiral 42 and by a second flexible metallic spiral 44 which are wrapped together side by side in order to obtain said tubular wire guide 40, said first flexible metallic spiral 42 having a first smaller internal diameter 43 and said second flexible metallic spiral 44 having a second smaller internal diameter 45, said second smaller internal diameter 45 being greater than said first smaller internal diameter 43 and it also has with it a ratio the value of which is greater or equal to 1,05 and in particular is greater or equal to 1,1 in order not to touch said welding wire during its advancement in particular when said wire guide 40 is bent, so reducing consequently the friction.

Advantageously in this way said welding wire is able to be supported only by one metallic spiral, whereas the other has only a function of lateral containment, i.e. the function of avoiding that the wire comes out from said metallic wire guide 40.

In this way advantageously the friction between said welding wire and said wire guide 40 by length unit of said wire guide 40 is substantially reduced of at least 50%, as the number of contact points of said wire guide 40 with said welding wire is significantly reduced.

Advantageously this reduces significantly the friction and permits to maintain a substantially constant and synchronized speed with an actuation of the advancement of said welding wire especially in the case of a pulsed arc welding torch.

Preferably said welding torch of type MIG or MAG is provided with an electric pulse generator in particular with pulsed arc for melting said welding wire.

Preferably said first flexible metallic spiral 42 and said second flexible metallic spiral 44 have both a substantially circular or oval section.

Alternatively preferably said first flexible metallic spiral 42 has a section substantially circular whereas said second flexible metallic spiral 44 has a substantially oval or rectangular section, or vice versa.

Advantageously this permits to further reduce the weight as by means of said oval or rectangular section the quantity of material by length unity of said wire guide is lower, with the same outer diameter 47 of said wire guide 40 and the same lower internal diameters 43 and 45.

Preferably said wire guide 40 is realized in a metallic material particularly steel and/or its alloys in order to obtain a reduced production cost and a high wear resistance.

Advantageously according to a preferred embodiment said arc welding torch comprises preferably a nozzle 90 provided with at least an exit opening 95 of the protection gas, said at least one exit opening 95 being asymmetrical with respect to a longitudinal axis 98, in order to better diffuse the protection gas of the welding bath along a transversal direction.

Preferably said nozzle 90 is also preferably asymmetric with respect to said longitudinal axis 98, so accelerating said protection gas in said transversal direction, in order to permit an increase of the speed on said welding bath and a faster cooling of the same.

So it was seen that a welding torch according to the present invention realizes the previously evidenced aims.

Furthermore, in practice the used materials, and also their dimensions and components, could be of any kind according to the technical needs.

## Claims

1. An arc welding torch (10), in particular of the type MIG or MAG, comprising a metallic tubular lance body (50) capable of conducting an electric current and inside which a protection gas of a welding bath can flow, and comprising a metallic contact tip (20) provided with a through axial bore (26) for the passage of a welding wire, said contact tip (20) is directly partially insertable inside and constrainable to an extremity 51 of said metallic lance body (50) or said contact tip (20) is partially insertable internally and constrainable to a metallic connection sleeve (60) which can be fixed to said extremity (51) of said metallic lance body (50), **characterized in that** said contact tip (20) respectively defining with said extremity (51) of said lance body (50) or with said connection sleeve (60) at least a longitudinal internal passage (70) capable in operation of determining a longitudinal flow of the protection gas such that it comes directly in contact with an external lateral portion (30) of said contact tip (20) in order to cool the same and permit also the passage of said protection gas of said welding bath.

2. The arc welding torch (10) of the type MIG or MAG according to claim 1, **characterized in that** said contact tip (20) is directly partially internally insertable and constrainable to said extremity (51) of said metallic torch body (50) in such a way to define said at least one internal longitudinal passage (70).

3. The arc welding torch (10) of the type MIG or MAG according to claim 1, **characterized by** comprising said metallic connecting sleeve (60) which is fixable to said extremity (51) of said metallic torch body (50), said contact tip (20) being partially internally insertable and constrainable to said metallic connecting sleeve (60) in such a way to define said at least one internal longitudinal opening (70).

4. The arc welding torch (10) of the type MIG or MAG according to any one of the claims from 1 to 3, **characterized in that** said at least one internal longitudinal opening (70) is at least a groove (32) realized in said external lateral portion (30) of said contact tip (20) or internally to said metallic connecting sleeve (60) or internally to said extremity (51) of said torch body (50).

5. The arc welding torch (10) of the type MIG or MAG according to claim 4, **characterized in that** said at least one groove (32) is realized in said external lateral portion (30) of said contact tip (20), said at least one groove (32) permitting the passage of said protection gas from a first extremity (22) to a second extremity (24) of said contact tip (20).

6. The arc welding torch (10) according to claim 5, **characterized in that** said at least one groove (32) is realized starting from a first base surface of said first extremity (22) and in a continuous manner extends towards said second extremity (24) at least for a portion of said contact tip (20) which starting from said first extremity (22) is insertable in said metallic connecting sleeve (60) or in said torch body (50).

7. The arc welding torch (10) according to any one of the claims 1 to 6, **characterized in that** said contact tip (20) has a diameter comprised between 6 and 16 mm and further comprises a threaded portion, preferably realized on said external lateral portion (30), which permits to insert partially and constrain axially said contact tip (20) internally to said metallic connecting sleeve (60) or internally to said extremity (51) of said torch body (50), in such a way to permit a good passage of electric current.

8. The arc welding torch (10) according to any one of claims 5 to 7, **characterized in that** said at least one groove (32) extends from said first extremity (22) towards said second extremity (24), in particular up to said second extremity (24), following a path substantially rectilinear or curvilinear.

9. The arc welding torch (10) according to claim 8, **characterized in that** said at least one groove (32) extends from said first extremity (22) towards said second extremity (24) following a substantially spiral or helical path.

10. The arc welding torch (10) according to any one of claims 5 to 8, **characterized in that** said at least one groove (32) are at least four grooves (32) and in particular at least height grooves (32) substantially rectilinear or curvilinear which extend from said first extremity (22) towards said second extremity (24) and which are in particular realized uniformly radially spaced in said external lateral portion (30).

11. The arc welding torch (10) according to any one of claims 1 to 10, **characterized by** comprising a metallic welding wire guide (40) able to guide a welding wire, and in that said wire guide (40) comprises a double flexible metallic spiral formed from a first flexible metallic spiral (42) and a second flexible metallic spiral (44) which are wrapped side by side one to the other in such a way to obtain said tubular wire guide (40), said first flexible metallic spiral (42) having a first internal inferior diameter (43) and said second flexible metallic spiral (44) having a second internal inferior diameter (45), said second internal inferior diameter (45) being greater than said first internal inferior diameter (43) and besides having a ratio with the same the value of which is equal or greater than 1,05 and in particular is equal or greater than 1,1 in such a way to not contact said welding wire during its feeding in particular when said guide wire (40) is bent, reducing consequently the friction.

12. The arc welding torch (10) according to claim 11, **characterized in that** said first flexible metallic spiral (42) and said second flexible metallic spiral (44) have both a section substantially circular or oval.

13. The arc welding torch (10) according to claim 11, **characterized in that** said first flexible metallic spiral (42) has a section substantially circular while said second flexible metallic spiral (44) has a section substantially oval or rectangular, or vice versa.

14. The arc welding torch (10) according to any one of the claims from 1 to 13, **characterized by** comprising a nozzle (90) provided of at least one exit opening (95) of the protection gas, said at least one exit opening (95) being asymmetric with respect to a longitudinal axis (98), in such a way to diffuse better the protection gas of said welding bath along a transversal direction.

15. The arc welding torch (10) according to claim 14, **characterized in that** said nozzle (90) is preferably asymmetric with respect to said longitudinal axis (98), in such a way to accelerate said protection gas in said transversal direction, in order to permit an increase of speed on said welding bath and a faster cooling of the same.

## Patentansprüche

1. Lichtbogen-Schweißbrenner (10), insbesondere vom Typ MIG oder MAG, umfassend einen metallischen rohrförmigen Lanzenkörper (50), der in der Lage ist, einen elektrischen Strom zu führen und innerhalb dessen ein Schutzgas eines Schweißbades strömen kann, und der eine metallische Kontaktspitze (20) umfasst, die mit einer axialen Durchgangsbohrung für den Übergang eines Schweißdrahtes versehen ist, wobei entweder die besagte Kontaktspitze (20) teilweise direkt eingefügt und mit einem Ende (51) des besagten metallischen Lanzenkörpers (50) verbunden werden kann, oder die besagte Kontaktspitze (20) teilweise intern eingefügt und mit einer metallischen Verbindungshülse (60) verbunden werden kann, die auf dem besagten Ende (51) des besagten metallischen Lanzenkörpers (50) befestigt werden kann, **dadurch gekennzeichnet, dass** die besagte Kontaktspitze (20) entweder resp. mit dem besagten Ende (51) des besagten Lanzenkörpers (50) oder mit der besagten Verbindungshülse (60) mindestens einen internen Längsdurchgang (70) definiert, der in der Lage ist, während des Betriebs eine längliche Längsströmung des Schutzgases derart zu bestimmen, dass es unmittelbar mit einem seitlichen äußeren Teil (30) der besagten Kontaktspitze (20) in Berührung kommt, um dieselbe zu kühlen und auch den Durchgang des besagten Schutzgases des besagten Schweißbades zu gestatten.

2. MIG- oder MAG-Lichtbogen-Schweißbrenner (10) nach Anspruch 1, **dadurch gekennzeichnet, dass** die besagte Kontaktspitze (20) teilweise direkt eingefügt und mit dem besagten Ende (51) des besagten metallischen Lanzenkörpers (50) derart verbunden werden kann, dass sie den besagten mindestens einen inneren Längsdurchgang (70) definiert.

3. MIG- oder MAG-Lichtbogen-Schweißbrenner (10) nach Anspruch 1, **dadurch gekennzeichnet, dass** er die besagte innere metallische Verbindungshülse (60) umfasst, die mit dem besagten Ende (51) des besagten metallischen Lanzenkörpers (50) befestiget werden kann, wobei die besagte Kontaktspitze (20) teilweise eingefügt und mit der besagten metallischen Verbindungshülse derart verbunden werden kann, dass sie den besagten mindestens einen inneren Längsdurchgang (70) definiert.

4. MIG- oder MAG-Lichtbogen-Schweißbrenner (10) nach einem der Ansprüche 1 bis 3, **dadurch gekennzeichnet, dass** der besagte mindestens innere Längsdurchgang (70) mindestens eine Nut (32) umfasst, die im besagten seitlichen äußeren Teil (30) der besagten Kontaktspitze (20) oder im Inneren der besagten metallischen Verbindungshülse (60) oder im Inneren des besagten Ende (51) des besagten Lanzenkörpers (50) ausgebildet wird.

5. MIG- oder MAG-Lichtbogen-Schweißbrenner (10) nach Anspruch 4, **dadurch gekennzeichnet, dass** die besagte mindestens eine Nut (32) im besagten seitlichen äußeren Teil (30) der besagten Kontaktspitze (20) ausgebildet wird, wobei die besagte mindestens eine Nut (32) den Durchgang des besagten Schutzgases von einem ersten Ende (22) bis zu einem zweiten Ende (24) der besagten Kontaktspitze (20) gestattet.

6. Lichtbogen-Schweißbrenner (10) nach Anspruch 5, **dadurch gekennzeichnet, dass** die mindestens eine Nut (32) aus einer ersten Grundfläche des besagten ersten Ende (22) hergestellt wird und sich in einer kontinuierlichen Weise in Richtung des besagten zweiten Ende (24) mindestens auf einem Teil der besagten Kontaktspitze (20) erstreckt, die aus dem besagten ersten Ende (22) in die besagte metallische Verbindungshülse (60) oder im Inneren des besagten Lanzenkörpers (50) eingefügt werden kann.

7. Lichtbogen-Schweißbrenner (10) nach jedem der Ansprüche 1 bis 6, **dadurch gekennzeichnet, dass** die besagte Kontaktspitze (20) einen Durchmesser zwischen 6 und 16 mm aufweist, und weiterhin einen Gewindeabschnitt umfasst, der vorzugsweise auf dem besagten äußeren seitlichen Abschnitt (30) ausgebildet ist, die gestattet, die besagte Kontaktspitze (20) intern in der besagten metallischen Verbindungshülse (60) oder intern im besagten Ende (51) des besagten Lanzenkörpers (50) derart teilweise einzuführen und axial zu verbinden, dass sie einen guten Durchgang des elektrischen Stromes gestattet.

8. Lichtbogen-Schweißbrenner (10) nach jedem der Ansprüche 5 bis 7, **dadurch gekennzeichnet, dass** sich die besagte mindestens eine Nut (32) von dem besagten ersten Ende (22) zu dem besagten zweiten Ende, insbesondere bis zu dem besagten zweiten Ende (24) erstreckt, indem sie einer im wesentlichen geraden oder gekrümmten Bahn folgt.

9. Lichtbogen-Schweißbrenner (10) nach Anspruch 8, **dadurch gekennzeichnet, dass** sich die besagte mindestens eine Nut (32) von dem besagten ersten Ende (22) zu dem besagten zweiten Ende (24) erstreckt, indem sie einer im wesentlichen spiralförmigen oder schraubenförmigen Bahn folgt.

10. Lichtbogen-Schweißbrenner (10) nach jedem der Ansprüche 5 bis 8, **dadurch gekennzeichnet, dass** die besagte mindestens eine Nut (32) aus mindestens vier und insbesondere aus mindestens acht Nuten (32) besteht, die im wesentlichen linienförmig oder gekrümmt sind und sich von dem besagten Ende (22) zu dem besagten zweiten Ende (24) erstrecken, und die insbesondere gleichmäßig radial beanstandet im besagten äußeren seitlichen Abschnitt (30) ausgebildet sind.

11. Lichtbogen-Schweißbrenner (10) nach jedem der Ansprüche 1 bis 10, **dadurch gekennzeichnet, dass** sie eine metallische Schweiß-Fadenführung (40) umfasst, die in der Lage ist, den besagten Schweißdraht zu führen, und dass die besagte Fadenführung (40) eine doppelte flexible Metallspirale umfasst, die aus einer ersten flexiblen Metallspirale (42) und einer zweiten flexiblen Metallspirale (44) besteht, die sich nebeneinander derart aufwickeln, dass die besagte rohrförmige Fadenführung (40) erreicht wird, wobei die besagte erste flexible Metallspirale einen ersten kleineren Innendurchmesser (43) aufweist und die besagte zweite flexible Metallspirale einen zweiten kleineren Innendurchmesser (45) aufweist, wobei der besagte kleinere Innendurchmesser (45) größer als der besagte erste kleinere Innendurchmesser (43) ist, und außerdem ein Verhältnis mit demselben aufweist, dessen Wert größer als oder gleich 1,05 und insbesondere größer als oder gleich 1 ist, in der Weise, dass sie die besagte Schweißdraht während ihrer Fortbewegung nicht berührt, insbesondere wenn die besagte Fadenführung (40) gekrümmt ist, so dass die Reibung entsprechend reduziert wird.

12. Lichtbogen-Schweißbrenner (10) nach Anspruch 11, **dadurch gekennzeichnet, dass** die besagte erste flexible Metallspirale (42) und die besagte zweite flexible Metallspirale (44) beide einen im Wesentlichen kreisförmigen oder ovalen Querschnitt aufweisen.

13. Lichtbogen-Schweißbrenner (10) nach Anspruch 11, **dadurch gekennzeichnet, dass** die besagte erste flexible Metallspirale (42) einen im Wesentlichen kreisförmigen Querschnitt aufweist, während die besagte zweite flexible Metallspirale (44) einen im Wesentlichen ovalen oder rechtwinkligen Querschnitt aufweist, oder umgekehrt.

14. Lichtbogen-Schweißbrenner (10) nach einem der Ansprüche 1 bis 13, **dadurch gekennzeichnet, dass** sie eine Düse (90) umfasst, die mindestens eine Austrittsöffnung (95) des Schutzgases aufweist, wobei die besagte mindestens eine Austrittsöffnung (95) asymmetrisch mit Bezug auf eine Längsachse (98) derart ist, dass sie das Schutzgas des besagten Schweißbades längs einer Querrichtung besser verteilen kann.

15. Lichtbogen-Schweißbrenner (10) nach Anspruch 14, **dadurch gekennzeichnet, dass** die besagte Düse (90) vorzugsweise derart asymmetrisch mit Bezug auf die besagte Längsachse (98) ist, dass sie das besagte Schutzgas in die besagte Querrichtung beschleunigt, um eine Erhöhung der Geschwindigkeit auf dem besagten Schweißbad und eine schnellere Kühlung desselben zu gestatten.

## Revendications

1. Torche de soudage à l'arc (10), en particulier du type MIG ou MAG, comprenant un corps de lance (50) tubulaire métallique capable de conduire un courant électrique et dans lequel un gaz de protection d'un bain de soudage peut s'écouler, et comprenant une pointe de contact (20) métallique avec un trou axial traversant (26) pour le passage d'un fil de soudage, ladite pointe de contact (20) étant directement partiellement insérable à l'intérieur et pouvant être fixée à une extrémité (51) dudit corps de lance (50) métallique ou ladite pointe de contact (20) étant partiellement insérable à l'intérieur et pouvant être fixée à un manchon de raccordement (60) métallique qui peut être fixé à ladite extrémité (51) dudit corps de lance (50) métallique, **caractérisée en ce que** ladite pointe de contact (20) définit respectivement avec ladite extrémité (51) dudit corps de lance (50) ou avec ledit manchon de raccordement (60) au moins un passage longitudinal interne (70) capable de déterminer pendant le fonctionnement un écoulement du gaz de protection, de telle manière qu'il entre directement en contact avec une partie latérale externe (30) de ladite pointe de contact (20) afin de refroidir la même et afin de permettre aussi le passage dudit gaz de protection dans ledit bain de soudage.

2. Torche de soudage à l'arc (10) du type MIG ou MAG selon la revendication 1, **caractérisée en ce que** ladite pointe de contact (20) est directement partiellement insérable à l'intérieur et peut être fixée à la dite extrémité (51) dudit corps de lance (50) métallique de telle manière à définir ledit au moins un passage longitudinal interne (70).

3. Torche de soudage à l'arc (10) du type MIG ou MAG selon la revendication 1, **caractérisée en ce qu'**elle comprend ledit manchon de raccordement (60) métallique qui peut être fixé à ladite extrémité (51) du dit corps de lance (50) métallique, ladite pointe de contact (20) pouvant être insérée et fixée audit manchon de raccordement (60) métallique, de telle manière à définir ledit au moins un passage interne longitudinal.

4. Torche de soudage à l'arc (10) du type MIG ou MAG selon une quelconque des revendications 1 à 3, **caractérisée en ce que** ledit au moins un passage interne longitudinal (70) est au moins une rainure (32) réalisée dans ladite partie latérale externe (30) de ladite pointe de contact (20) ou à l'intérieur dudit manchon de raccordement (60) métallique ou à l'intérieur de ladite extrémité (51) dudit corps de lance (50).

5. Torche de soudage à l'arc (10) du type MIG ou MAG selon la revendication 4, **caractérisée en ce que** ladite au moins une rainure (32) est réalisée dans ladite partie latérale externe (30) de ladite pointe di contact (20), ladite au moins une rainure (32) permettant le passage dudit gaz de protection d'une première extrémité (22) à une deuxième extrémité (24) de ladite pointe de contact (20).

6. Torche de soudage à l'arc (10) selon la revendication 5, **caractérisée en ce que** ladite au moins une rainure (32) est réalisée à partir d'une première surface de base de ladite première extrémité (22) et en manière continue elle s'étend vers ladite deuxième extrémité (24) au moins pour une partie de ladite pointe de contact (20), qui à partir de ladite première extrémité (22) peut être insérée dans ledit manchon de raccordement (60) métallique ou entre ledit corps de lance (50).

7. Torche de soudage à l'arc (10) selon une quelconque des revendications 1 à 6, **caractérisée en ce que** ladite pointe de contact (20) a un diamètre entre 6 et 16 mm et en outre elle comprend une partie filetée, préférablement sur ladite partie latérale externe (30), qui permet d'insérer partiellement et de retenir axialement ladite pointe de contact (20) à l'intérieur dudit manchon de raccordement (60) métallique ou à l'intérieur de ladite extrémité (51) dudit corps de lance (50), de telle manière à permettre un bon passage d'un courant électrique.

8. Torche de soudage à l'arc (10) selon une quelconque des revendications 5 à 7, **caractérisée en ce que** ladite au moins une rainure (32) s'étend de ladite première extrémité (22) vers ladite deuxième extrémité (24), en particulier jusqu'à ladite deuxième extrémité (24), en suivant un parcours sensiblement droit ou incurvé.

9. Torche de soudage à l'arc (10) selon la revendication 8, **caractérisée en ce que** ladite au moins une rainure (32) s'étend de ladite première extrémité (22) vers ladite deuxième extrémité (24) en suivant un parcours sensiblement à spirale ou à hélice.

10. Torche de soudage à l'arc (10) selon une quelconque des revendications 5 à 8, **caractérisée en ce que** ladite au moins une rainure (32) comprend au moins quatre rainures et en particulier au moins huit rainures (32) sensiblement linéaires ou incurvées qui s'étendent de ladite première extrémité (22) vers la dite deuxième extrémité (24) et qui en particulier sont réalisées régulièrement espacées radialement dans ladite partie latérale externe (30).

11. Torche de soudage à l'arc (10) selon une quelconque des revendications 1 à 10, **caractérisée en ce qu'**elle comprend un guide du fil de soudage (40) métallique qui est capable de guider ledit fil de soudage, et que ledit guide du fil (40) comprend une double spirale métallique flexible formée par une première spirale métallique (42) flexible et une deuxième spirale métallique (44) flexible, qui sont enroulées côte à côte les unes aux autres, de telle manière à obtenir ledit guide du fil (40) tubulaire, ladite première spirale métallique (42) flexible ayant un premier diamètre interne inférieur, et ladite deuxième spirale métallique (44) flexible ayant un deuxième diamètre interne inférieur (45), ledit deuxième diamètre interne inférieur étant plus grand que ledit premier diamètre interne inférieur (43) et en outre ayant un rapport avec le même dont la valeur est plus grand ou égal à 1,05 et en particulier est plus grand ou égal à 1,1, de telle manière à ne pas toucher ledit fil de soudage pendant son avancement en particulier quand ledit guide du fil (40) est incurvé, ce qui réduit par conséquent la friction.

12. Torche de soudage à l'arc (10) selon la revendication 11, **caractérisée en ce que** ladite première spirale métallique (42) flexible et ladite deuxième spirale métallique (44) flexible ont les deux une section sensiblement circulaire ou ovale.

13. Torche de soudage à l'arc (10) selon la revendication 11, **caractérisée en ce que** ladite première spirale métallique (42) flexible a une section sensiblement circulaire tandis que ladite deuxième spirale métallique (44) flexible a une section sensiblement ovale ou rectangulaire, ou vice versa.

14. Torche de soudage à l'arc (10) selon une quelconque des revendications 1 à 13, **caractérisée en ce qu'**elle comprend une buse (90) avec une ouverture de sortie (95) du gaz de protection, ladite au moins une ouverture se sortie (95) étant asymétrique par rapport à un axe longitudinal (98), de telle manière à mieux répandre le gaz de protection dudit bain de soudage le long d'une direction transversale.

15. Torche de soudage à l'arc (10) selon la revendication 14, **caractérisée en ce que** ladite buse (90) est préférablement asymétrique par rapport au dit axe longitudinal (98), de telle manière à accélérer ledit gaz de protection dans ladite direction transversale, afin de permettre une augmentation de vitesse sur ledit bain de soudage et un refroidissement plus rapide du même.
